# EUROPEAN PATENT APPLICATION

(11) **EP 2 887 734 A1**
(43) Date of publication of application: **24.06.2015**
(21) Application number: 14193564.3
(22) Date of filing: 18.11.2014
(51) Int. Cl.: H04W 36/00

(54) **Signaling details of user equipment mobility information related to idle and connected mode**

(30) Priority: 20.12.2013 WO PCT/IB2013/061230
(71) Applicant: Nokia Corporation, 02610 Espoo (FI)
(72) Inventor: Koskinen, Jussi-Pekka, 90420 Oulu (FI); Keskitalo, Ilkka, 90240 Oulu (FI); Koskela, Jarkko, 90510 Oulu (FI)
(74) Representative: Nokia Corporation

(57) **Abstract**

Optimized procedures and signaling for the reporting of mobility information may benefit various communication systems. For example, communication systems of the third generation partnership project (3GPP) may benefit from signaling details of user equipment (UE) mobility information related to idle and connected mode. For example, a method can include determining that a cell global identification is missing for a cell to be reported in a cell history report. The method can also include reporting the cell to a network as missing any cell global identification.

## Description

### BACKGROUND:

### Field:

Optimized procedures and signaling for the reporting of mobility information may benefit various communication systems. For example, communication systems of the third generation partnership project (3GPP) may benefit from signaling details of user equipment (UE) mobility information related to idle and connected mode.

### Description of the Related Art:

One area of 3GPP relates to enhancements for heterogeneous network (HetNet), which can refer to a mixture of deployed cell types, macro/pico, or the like. For example, mobility may need to be more robust in future network deployment scenarios.

Further, 3GPP approaches may need to minimize signaling overhead and UE power consumption with infrequent and frequent small data transfer. Such traffic is typical in conventional systems especially for machine type communication (MTC) devices but also for smart phone particularly when they generate only background traffic. The inter-arrival of traffic bursts may vary a lot. For MTC devices the bursts can be of some tens of seconds, minutes, days or even weeks, whereas with smart phones the interval can typically be counted in seconds or tens of seconds.

The data amount per burst may be small which may result in high signaling overhead with respect to transferred payload data. In order to minimize the signaling overhead in such irregular traffic, mobility information and traffic pattern can be used as inputs when deciding whether to release the connection or keep the UE in connected mode.

Mobility information may also be useful when trying to optimize the offloading possibilities in HetNet environment, for example, when deciding whether to hand over the UE to small cells for traffic offloading or if it would be better to keep the UE connected to a macro cell. For this purpose, reporting of UE mobility information may occur at the connection setup.

Conventionally, a UE may send up to 16 cells in cell history information. A global cell ID may be used for all cells. As a baseline, the time of stay (ToS) information in the cell history has 1s granularity with maximum value of 255s. The UE does not omit cells such as ping-pong cells or cells with too short a time of stay. However, the UE does not always have global cell IDs in connected mode and those therefore conventionally could not be reported. In addition, mixture of idle mode and connected mode information from the same cell is not clear in a conventional report.

Related to reporting of HetNet mobility information, two conventional approaches are to include the mobility information in the connection setup complete message or to indicate the availability of mobility information, with reporting happening on request by the evolved Node B (eNB).

Moreover two conventional options for the mobility information are that the mobility state estimate (MSE) is provided in which the UE reports normal/medium/high mobility based on the cell changes during an observation window or that the mobility history information is provided in which the UE reports the cell IDs and time spent in the cells.

If the reporting is to be done by request of eNB, there can be a separate indication about the availability of the history information, similar to radio link failure (RLF) or random access channel (RACH) reporting.

In another alternative, the UE can first report the MSE and if the network considers MSE to be insufficient or unreliable, the network may proceed by requesting the mobility history information.

### SUMMARY:

According to certain embodiments, a method can include determining that a cell global identification is missing for a cell to be reported in a cell history report. The method can also include reporting the cell to a network as missing any cell global identification.

In certain embodiments, a method can include determining that an idle-connected transition for a cell is to be included a cell history report. The method can also include indicating time of stay information associated with the idle-connected transition in the cell history report.

A method, according to certain embodiments, can include determining that cell history information is to be reported to a network in a cell history report. The method can also include including a non-long term evolution indication in the cell history report.

A method, in certain embodiments, can include receiving a cell history report, wherein a cell global identification is missing for a cell to be reported in the cell history report. The method can also include processing the cell history report without the cell global identification.

According to certain embodiments, a method can include receiving a cell history report, wherein information regarding an idle-connected transition for a user equipment in a cell is included in the cell history report. The method can also include processing the cell history report based on the information regarding the idle-connected transition, wherein the cell history report comprises time of stay information associated with the idle-connected transition.

In certain embodiments, a method can include receiving a cell history report, wherein information regarding a radio access technology for a user equipment in a cell is included in the cell history report. The method can also include processing the cell history report based on the information regarding the radio access technology.

An apparatus, according to certain embodiments, can include at least one processor and at least one memory including computer program code. The at least one memory and the computer program code can be configured to, with the at least one processor, cause the apparatus at least to determine that a cell global identification is missing for a cell to be reported in a cell history report. The at least one memory and the computer program code can also be configured to, with the at least one processor, cause the apparatus at least to report the cell to a network as missing any cell global identification.

An apparatus, in certain embodiments, can include at least one processor and at least one memory including computer program code. The at least one memory and the computer program code can be configured to, with the at least one processor, cause the apparatus at least to determine that an idle-connected transition for a cell is to be included a cell history report. The at least one memory and the computer program code can also be configured to, with the at least one processor, cause the apparatus at least to indicate time of stay information associated with the idle-connected transition in the cell history report.

According to certain embodiments, an apparatus can include at least one processor and at least one memory including computer program code. The at least one memory and the computer program code can be configured to, with the at least one processor, cause the apparatus at least to determine that cell history information is to be reported to a network in a cell history report. The at least one memory and the computer program code can also be configured to, with the at least one processor, cause the apparatus at least to include a non-long term evolution indication in the cell history report.

In certain embodiments, an apparatus can include at least one processor and at least one memory including computer program code. The at least one memory and the computer program code can be configured to, with the at least one processor, cause the apparatus at least to receive a cell history report, wherein a cell global identification is missing for a cell to be reported in the cell history report. The at least one memory and the computer program code can also be configured to, with the at least one processor, cause the apparatus at least to process the cell history report without the cell global identification.

An apparatus, according to certain embodiments, can include at least one processor and at least one memory including computer program code. The at least one memory and the computer program code can be configured to, with the at least one processor, cause the apparatus at least to receive a cell history report, wherein information regarding an idle-connected transition for a user equipment in a cell is included in the cell history report. The at least one memory and the computer program code can also be configured to, with the at least one processor, cause the apparatus at least to process the cell history report based on the information regarding the idle-connected transition, wherein the cell history report comprises time of stay information associated with the idle-connected transition.

An apparatus, in certain embodiments, can include at least one processor and at least one memory including computer program code. The at least one memory and the computer program code can be configured to, with the at least one processor, cause the apparatus at least to receive a cell history report, wherein information regarding a radio access technology for a user equipment in a cell is included in the cell history report. The at least one memory and the computer program code can also be configured to, with the at least one processor, cause the apparatus at least to process the cell history report based on the information regarding the radio access technology.

According to certain embodiments, an apparatus can include means for determining that a cell global identification is missing for a cell to be reported in a cell history report. The apparatus can also include means for reporting the cell to a network as missing any cell global identification.

In certain embodiments, an apparatus can include means for determining that an idle-connected transition for a cell is to be included a cell history report. The apparatus can also include means for indicating time of stay information associated with the idle-connected transition in the cell history report.

An apparatus, according to certain embodiments, can include means for determining that cell history information is to be reported to a network in a cell history report. The apparatus can also include means for including a non-long term evolution indication in the cell history report.

An apparatus, in certain embodiments, can include means for receiving a cell history report, wherein a cell global identification is missing for a cell to be reported in the cell history report. The apparatus can also include means for processing the cell history report without the cell global identification.

According to certain embodiments, an apparatus can include means for receiving a cell history report, wherein information regarding an idle-connected transition for a user equipment in a cell is included in the cell history report. The apparatus can also include means for processing the cell history report based on the information regarding the idle-connected transition, wherein the cell history report comprises time of stay information associated with the idle-connected transition.

In certain embodiments, an apparatus can include means for receiving a cell history report, wherein information regarding a radio access technology for a user equipment in a cell is included in the cell history report. The apparatus can also include means for processing the cell history report based on the information regarding the radio access technology.

According to certain embodiments, a non-transitory computer readable medium encoded with instructions that, when executed in hardware, perform a process. The process can include any of the above-described methods.

In certain embodiments, a computer program product can encode instructions for performing a process. The process can include any of the above-described methods.

### BRIEF DESCRIPTION OF THE DRAWINGS:

For proper understanding of the invention, reference should be made to the accompanying drawings, wherein:
   Figure 1 illustrates a method according to certain embodiments.
   Figure 2 illustrates another method according to certain embodiments.
   Figure 3 illustrates a further method according to certain embodiments.
   Figure 4 illustrates a system according to certain embodiments.

### DETAILED DESCRIPTION:

Certain embodiments provide an optimized procedure and signaling for the reporting of the mobility information. For example, in certain embodiments, when a cell global identification (CGI) is missing for a cell to be reported, the user equipment (UE) can report the cell to the network as missing any cell global identification. This reporting may be accomplished by, for example, not including the cell in the history information. Alternatively, the user equipment can include an explicit/implicit indication of missed CGI, such as by in place of CGI including a physical cell identification (PCI).

In another embodiment, when there are idle-connected transitions to be included in the report, the time of stay can be indicated as a sum of stay in the cell from all or a subset of radio resource control states, even across state changes. Alternatively, times of stay can be indicated according to each radio resource control (RRC) state.

In a further embodiment, when a UE is not served by long term evolution (LTE), the cell history information can also indicate this to the network (NW). The reporting of this connectivity information can be provided via a non-LTE cell indication. The non-LTE cell indication can also be used to indicate an out of service situation.

Each of the above-described embodiments may be combined with one another. Moreover, each of the above-described embodiments may be variously embodied, as discussed below.

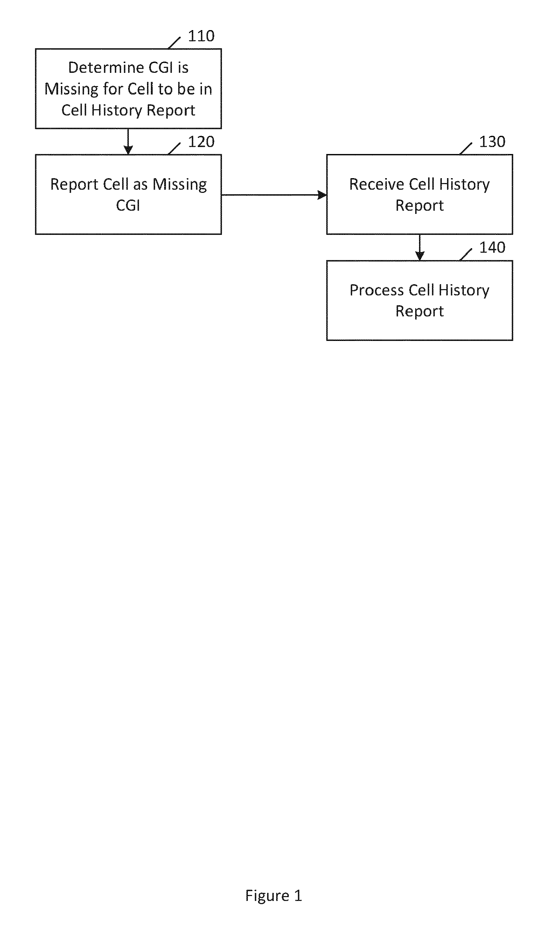

Figure 1 illustrates a method according to certain embodiments. As shown in Figure 1, a method may include, at 110, determining that a cell global identification is missing for a cell to be reported in a cell history report. The method can also include, at 120, reporting the cell to a network as missing any cell global identification.

The reporting the cell as missing any cell global identification can be done not including the cell in history information. Alternatively, or in addition, the reporting the cell as missing any cell global identification can include including an explicit or implicit indication of a missed cell global identification. The indication can be a physical cell identification of the cell missing the cell global identification or an indication of an unknown cell global identification.

The method can also include, at 130, receiving the cell history report, for example, at a network element. The cell global identification can be missing for a cell that would otherwise be reported in the cell history report. The method can further include, at 140, processing the cell history report without the cell global identification.

The processing can include determining that a user equipment does not know the cell global identification of the cell, based on an explicit or implicit indication of a missed cell global identification, as described above.

Thus, generally, if a global cell id is not available, a physical cell id (PCI) can be included instead of the global cell id in mobility history information. Alternatively, the specific cell can be removed from the mobility history information reporting list. The list can be provided with an indication that cell reporting is missed due to global cell id not being available. Alternatively, there can be an indication of unknown CGI with or without time of stay.

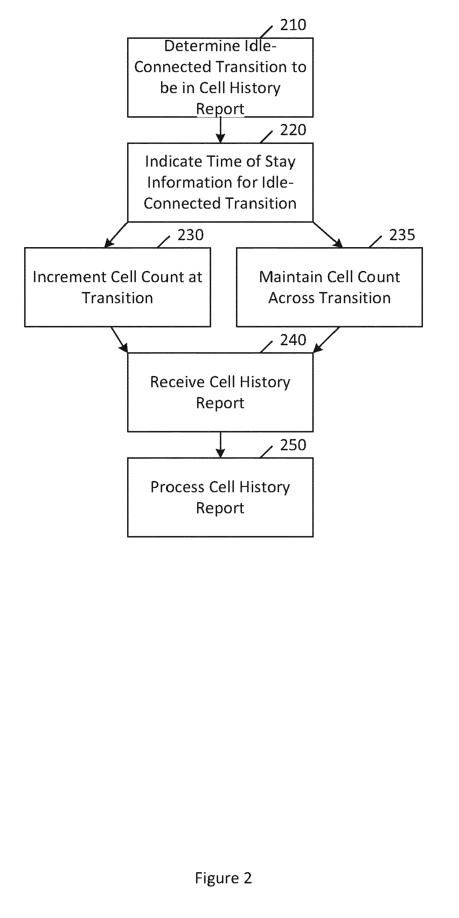

Figure 2 illustrates another method according to certain embodiments. As shown in Figure 2, a method can include, at 210, determining that an idle-connected transition for a cell is to be included a cell history report. The method can also include, at 220, indicating time of stay information associated with the idle-connected transition in the cell history report. In other words, the time of stay information associated with at least one segment on each side of at least one such transition can be reported.

The time of stay information is indicated as a sum of stay in the cell from all or a subset of radio resource control states. Alternatively, the time of stay information can be separately indicated according to each radio resource control state. Moreover, the time of stay information can be indicated together with an indication of a corresponding radio resource control state.

The method can further include, at 230, incrementing a cell count at the idle-connected transition. Alternatively, the method can include, at 235, maintaining an existing cell count at the idle-connected transition.

The method can also include, at 240, receiving the cell history report including information regarding the idle-connected transition for a user equipment in the cell. The method can further include, at 250, processing the cell history report based on the information regarding the idle-connected transition, wherein the cell history report comprises time of stay information associated with the idle-connected transition.

Thus, generally, if history information for a user equipment includes consecutive information from the same cell due to, for example, transitions between idle state and connected state, then either idle and connected time of stays can be added together or idle and connected state times of stay can be reported separately. Moreover, when the times of stay are reported separately, an indication of whether the reported time of stay is from an idle state or a connected state can be provided. Alternatively, the time of stay from the same cell can be reported multiple times without an indication of whether the reported time of stay is from an idle state or a connected state.

Cell count, which may be limited, in the report can either be incremented or not incremented at the state transition. For example, if separate reporting of idle and connected states is used, then the number of log entries may be constant. Alternatively, in a combined idle/connected reporting approach the number of reported cells can be constant, up to a maximum, regardless of the number of state transitions. Further, if the number of maximum log entries is not specified, such as if there is a time limitation for the logging, then there can be log entries on a per cell basis or a per RRC state plus cell basis.

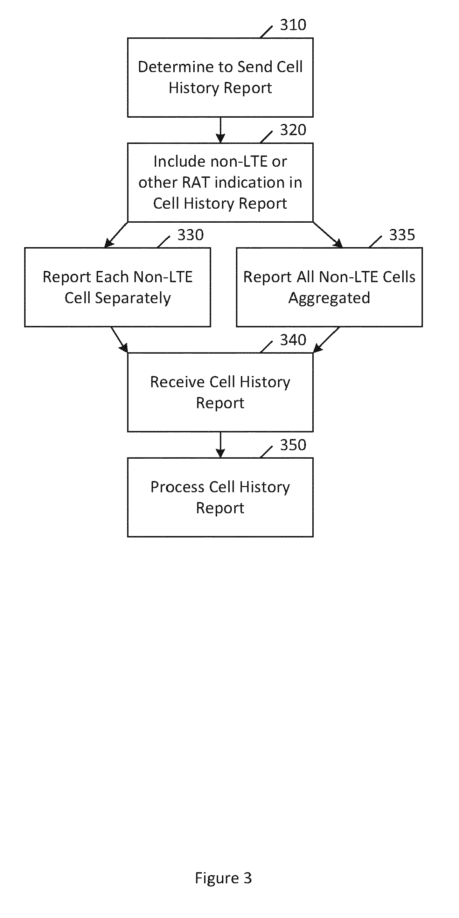

Figure 3 illustrates a further method according to certain embodiments. As shown in Figure 3, a method can include, at 310, determining that cell history information is to be reported to a network in a cell history report. The method can also include, at 320, including a non-long term evolution (non-LTE) indication in the cell history report. A non-LTE indication is one example of an indication of a radio access technology.

The non-long term evolution indication can be configured to indicate that a user equipment was not served by long term evolution in a corresponding cell. Moreover, the non-long term evolution indication can be configured to indicate an out of service situation.

The method can further include, at 330, reporting each non-long term evolution cell separately in the cell history report. Alternatively, the method can include, at 335, combining all non-long term evolution cells when reporting the non-long term evolution cells in the cell history report.

The method can further include, at 340, receiving a cell history report, wherein information regarding a radio access technology for a user equipment in a cell is included in the cell history report. The method can additionally include, at 350, processing the cell history report based on the information regarding the radio access technology.

Thus, in general, if the history information involves inter-radio access technology (RAT) cells, the cells can be indicated as such. For example, the user equipment can mark a cell as being non-LTE cell and can indicate a time of stay outside of LTE service. Moreover, each non-LTE cell can be reported separately or summed together.

Additionally, for each non-LTE cell, some additional specific information can be included, such as carrier frequency and/or PCI. The indication of the non-LTE cell could also be used to indicate that the UE does not have LTE service, such as whenever UE is not camped/on service in LTE.

As mentioned above, various embodiments can be combined together. Thus, in some cases, each of the methods of Figures 1, 2, and 3 can be practiced together.

Certain embodiments may have various advantages and/or benefits. For example, in certain embodiments signaling details for UE history information may be clear, which may result in consistent UE behavior.

In addition to the above, information exchange between eNBs can be enhanced to support discontinuous reception (DRX) information sharing. Thus, one processing use by an eNB for a cell history list according to certain embodiments may be to provide DRX information sharing.

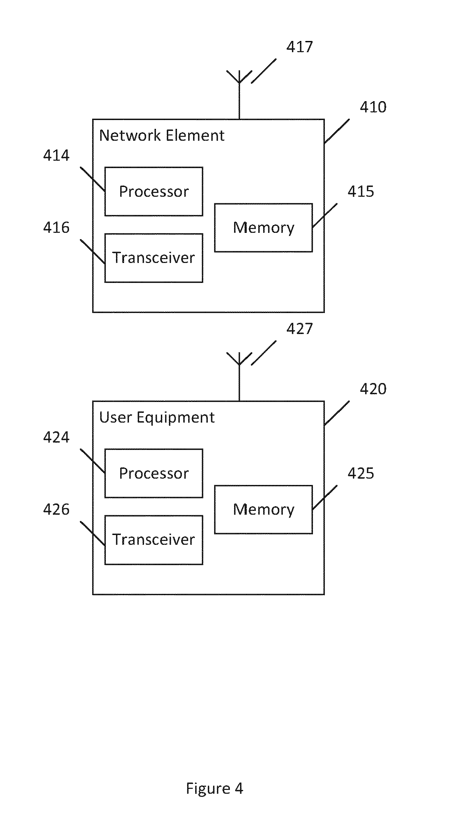

Figure 4 illustrates a system according to certain embodiments of the invention. It should be understood that each block of the flowchart of Figures 1 through 3 and any combination thereof may be implemented by various means or their combinations, such as hardware, software, firmware, one or more processors and/or circuitry. In one embodiment, a system may include several devices, such as, for example, network element 410 and user equipment (UE) or user device 420. The system may include more than one UE 420 and more than one network element 410, although only one of each is shown for the purposes of illustration. A network element can be an access point, a base station, an eNode B (eNB), server, host or any of the other network elements discussed herein. Each of these devices may include at least one processor or control unit or module, respectively indicated as 414 and 424. At least one memory may be provided in each device, and indicated as 415 and 425, respectively. The memory may include computer program instructions or computer code contained therein. One or more transceiver 416 and 426 may be provided, and each device may also include an antenna, respectively illustrated as 417 and 427. Although only one antenna each is shown, many antennas and multiple antenna elements may be provided to each of the devices. Other configurations of these devices, for example, may be provided. For example, network element 410 and UE 420 may be additionally configured for wired communication, in addition to wireless communication, and in such a case antennas 417 and 427 may illustrate any form of communication hardware, without being limited to merely an antenna. Likewise, some network elements 410 may be solely configured for wired communication, and such cases antenna 417 may illustrate any form of wired communication hardware, such as a network interface card.

Transceivers 416 and 426 may each, independently, be a transmitter, a receiver, or both a transmitter and a receiver, or a unit or device that may be configured both for transmission and reception. The transmitter and/or receiver may also be implemented as a remote radio head which is not located in the device itself, but in a mast, for example. It should also be appreciated that according to a liquid or flexible radio concept, the operations and functionalities may be performed in different entities, such as nodes, hosts or servers, in a flexible manner. In other words, division of labor may vary case by case. One or more functionalities may also be implemented as a virtual application that is as software that can run on a server.

A user device or user equipment may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless communication capabilities or any combinations thereof.

In an exemplary embodiment, an apparatus, such as a node or user device, may include means for carrying out embodiments described above in relation to Figures 1 through 3.

Processors 414 and 424 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set, for example, procedures, functions, and so on. Memories 415 and 425 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity may be internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network element 410 and/or UE 420, to perform any of the processes described above (see, for example, Figure 1 through 3). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, or the like, or a low-level programming language, such as a machine language, or assembler. Alternatively, certain embodiments of the invention may be performed entirely in hardware.

Furthermore, although Figure 4 illustrates a system including a network element 410 and a UE 420, embodiments of the invention may be applicable to other configurations, and configurations involving additional elements, as illustrated and discussed herein. For example, multiple user equipment devices and multiple network elements may be present, or other nodes providing similar functionality, such as nodes that combine the functionality of a user equipment and an access point, such as a relay node.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

### GLOSSARY

- 3GPP: third generation partnership project
- ASIC: application specific integrated circuit
- CGI: cell global identification
- CPU: central processing unit
- DRX: discontinuous reception
- DSP: digital signal processor
- eNB: enhanced or evolved NodeB
- FPGA: field programmable gate array
- HetNet: heterogeneous network
- HDD: hard disk drive
- LTE: long term evolution of 3GPP
- MS: mobile station
- MSE: mobility state estimate
- MTC: machine type communication
- NW: network
- PCI: physical cell identification
- PDA: personal digital assistant
- PLD: programmable logical device
- RACH: random access channel
- RAM: random access memory
- RAT: radio access technology
- RLF: radio link failure
- RRC: radio resource control
- SI: system information
- ToS: time of stay
- UE: user equipment

## Claims

1. A method, comprising:
determining that a cell global identification is missing for a cell to be reported in a cell history report; and
reporting the cell to a network.

2. The method of claim 1, wherein the reporting the cell comprises not including the cell in history information.

3. The method of claim 1, wherein the reporting the cell comprises including an explicit or implicit indication of a missed cell global identification.

4. The method of claim 3, wherein the indication is a physical cell identification of the cell.

5. The method of claim 3, wherein the indication comprises an indication of an unknown cell global identification.

6. A method, comprising:
determining that an idle-connected transition for a cell is to be included a cell history report; and
indicating time of stay information associated with the idle-connected transition in the cell history report, wherein the time of stay information is indicated as a sum of stay in the cell from all or a subset of radio resource control states.

7. The method of claim 6, further comprising:
incrementing a cell count at the idle-connected transition.

8. The method of claim 6, further comprising:
maintaining an existing cell count at the idle-connected transition.

9. A method, comprising:
receiving a cell history report, wherein a cell global identification is missing for a cell to be reported in the cell history report; and
processing the cell history report without the cell global identification.

10. The method of claim 9, wherein the processing comprises determining that a user equipment does not know the cell global identification of the cell, based on an explicit or implicit indication of a missed cell global identification.

11. The method of claim 10, wherein the indication is a physical cell identification of the cell missing the cell global identification.

12. The method of claim 10, wherein the indication comprises an indication of an unknown cell global identification.

13. A method, comprising:
determining that cell history information is to be reported to a network in a cell history report; and
including a radio access technology indication in the cell history report.

14. The method of claim 13, wherein the radio access technology indication is configured to indicate that a user equipment was not served by the radio access technology in a corresponding cell.

15. An apparatus comprising means to perform a method according to any one of claims 1 through 5, or according to any one of claims 6 through 8, or according to any one of claims 9 through 12, or according to any one of claims 13 through 14.
